Europäisches Patentamt

European Patent Office

Office européen des brevets

(19)

(11) Numéro de publication: **0 137 882
B1**

(12) **FASCICULE DE BREVET EUROPEEN**

(45) Date de publication du fascicule du brevet:
**30.03.88**

(21) Numéro de dépôt: **83402021.6**

(22) Date de dépôt: **18.10.83**

(51) Int. Cl.⁴: **A 01 F 15/14**

(54) **Dispositif de liage pour presses à balles cylindriques.**

(43) Date de publication de la demande:
**24.04.85 Bulletin 85/17**

(45) Mention de la délivrance du brevet:
**30.03.88 Bulletin 88/13**

(84) Etats contractants désignés:
**DE FR GB IT NL**

(56) Documents cités:
**EP - A - 0 064 113
FR - A - 2 446 065
GB - A - 2 018 192
US - A - 2 850 964**

(73) Titulaire: **JOHN DEERE (Société Anonyme), 20, Rue André Dessaux, F-45401 Fleury-les-Aubrais (FR)**

(72) Inventeur: **Coeffic, Jean Pierre, 73 Faubourg Hindebaire, F-54120 Baccarat (FR)**

(74) Mandataire: **Pruvost, Marc Henri et al, Cabinet ORES 6, Avenue de Messine, F-75008 Paris (FR)**

## Description

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un dispositif comprenant un bras guide-ficelle pivotant ou un organe analogue déplacé selon un mouvement transversal au sens de marche de la presse devant l'orifice d'entrée des produits récoltés à partir du champ. La ficelle, qui provient d'une réserve appropriée est guidée par ce bras en passant généralement à l'intérieur d'un tube et son extrémité est saisie par les produits de récolte constituant la balle à la fin de l'opération de formation de celle-ci, de sorte qu'elle est entraînée autour de cette balle sous l'effet de la rotation de cette dernière entre les bandes ou courroies et que ce mouvement d'enroulement se conjugue à uen répartition des spires de ficelle ainsi formées sur la longueur de la balle, du fait du mouvement de balayage transversal du bras.

Différents types de dispositifs ont été proposés pour la commande de ce mouvement de balayage transversal du bras guide-ficelle pivotant.

Suivant un agencement connu (EP-A 0 064 113), le bras est retenu par verrouillage dans une position d'arrêt ou de repos située d'un côté de la machine, qui correspond généralement à sa position de fin de course de liage, et pour l'opération de liage il est libéré, est amené alors rapidement, sous l'action d'un ressort, dans une position de départ située de l'autre côté de la machine, puis il est déplacé en un lent mouvement de balayage en face de l'orifice ou de la fente d'entrée des produits de récolte dans la presse, pour réaliser le liage de la balle, sous l'action d'un bras d'entraînement porté par un arbre vertical dont la rotation est assurée à partir d'un excentrique.

Suivant un autre agencement connu (FR-A 2 446 065), le bras guide-ficelle, qui est immobilisé dans une position d'arrêt ou de repos pendant l'opération de formation de la balle est, pour le liage, déplacé positivement en un mouvement de va-et-vient transversalement à la presse devant l'orifice ou la fente d'entrée des produits de récolte, en assurant ainsi le liage de la balle au cours de ce déplacement successif dans les deux directions, par le fait qu'un point intermédiaire du bras guide-ficelle est relié à un excentrique, lequel est entraîné positivement en rotation lors de l'opération de liage, en provoquant ainsi le déplacement en va-et-vient requis du bras.

L'invention se rapporte aux dispositifs de ce second type, qui fournissent ainsi pour la balle un liage «croisé».

Il a déjà été proposé également (US-A 2 850 964) de réaliser un mécanisme de commande du bras guide-ficelle comportant une roue dentée présentant sur sa périphérie une zone non dentée. Dans cet agencement, cette roue dentée est soumise à l'action d'un ressort afin, lors d'un déverrouillage, d'être déplacée en rotation pour amener sa denture en prise avec un pignon d'entraînement. Ladite roue dentée porte par ailleurs un bras qui porte lui-même un galet attaquant une came liée au tube ou bras guide-ficelle. Ainsi, lorsque la denture de la roue dentée est amenée en prise avec le pignon d'entraînement, le galet coopère avec la came pour provoquer le déplacement du tube ou bras guide-ficelle. Ce mécanisme est complexe et il est en outre du type à simple action, un seul mouvement unidirectionnel étant alors obtenu pour le bras guide-ficelle.

On a encore proposé (EP-A 0 075 252), dans un mécanisme de commande de liage, de relier le bras guide-ficelle à un organe denté dont l'entraînement est assuré par venue en prise avec un autre organe denté, lequel comporte une denture partielle ménageant une «plage» non dentée qui permet ainsi au bras de demeurer dans une position de fin de course d'un côté de la machine, afin de fournir dans cette zone plusieurs spires de ficelle de liage. Un système élastique permet de ramener les dentures en prise pour provoquer le déplacement positif du bras guide-ficelle devant la fente d'entrée de la machine.

Le but de l'invention est de créer un dispositif de construction simple et robuste, fournissant un déplacement positif du bras en un mouvement de va-et-vient, et dont la simplicité tient compte en particulier des conditions de travail souvent difficiles généralement rencontrées sur le champ.

L'invention concerne en conséquence un dispositif de liage pour presses à balles cylindriques du type comprenant un bras guide-ficelle monté de façon pivotante sur la presse de façon à pouvoir effectuer un mouvement de balayage devant l'orifice d'entrée des produits de récolte dans cette presse, ce bras étant alimenté en ficelle à partir d'une réserve de ficelle et guidant celle-ci jusque devant cet orifice d'entrée, ledit bras étant retenu en position de repos d'un côté de la presse pendant la formation de la balle dans la chambre de cette presse au moyen d'un organe de verrouillage, un organe élastique monté en un point de la presse et le bras guide-ficelle déplaçant ce bras lors de son déverrouillage au début de l'opération de liage, pour que la commande de pivotement dudit bras soit ensuite assurée à partir d'un excentrique, caractérisé en ce qu'un point de ce bras guide-ficelle ou d'un élément relié rigidement à lui, écarté du point de montage à pivotement du bras, est relié directement par une biellette ou analogue à un maneton ou pivot excentré de cet excentrique, en ce que ledit excentrique est muni d'une denture périphérique présentant une discontinuité formant un secteur périphérique non denté, en ce que cette denture de l'excentrique engrène pendant le liage avec un organe denté entraîné en rotation de façon continue à partir de la presse, en ce que la position de ce secteur périphérique non denté est telle qu'il se trouve en regard de l'organe denté pendant la formation de la balle, de sorte que l'excentrique demeure alors immobile, et en ce que l'organe élastique est monté de façon à amener la denture de l'excentrique en prise avec l'organe denté associé lors du déverrouillage, en provoquant par suite la rotation de cet excentrique et le déplacement du bras guide-ficelle.

Suivant un mode de réalisation, l'organe denté peut être constitué par un pignon, une vis sans fin ou un organe analogue calé sur un arbre entraîné en rotation de façon continue à partir de la presse.

De façon avantageuse, le bras guide-ficelle est monté à pivotement en un point de sa longueur écarté de ses extrémités, en formant un levier à deux bras dont l'un est attaqué par l'organe de verrouillage du bras guide-ficelle dans la position de repos ou d'arrêt, la biellette ou analogue étant reliée au côté opposé de ce levier formé par le bras guide-ficelle.

Suivant une variante, le bras guide-ficelle peut être monté à pivotement vers une extrémité, la biellette ou analogue attaquant ce bras guide-ficelle entre cette extrémité de montage à pivotement et l'extrémité retenue par l'organe de verrouillage.

On voit que l'agencement ainsi obtenu est à la fois simple et robuste, et est capable de résister aux conditions de travail rencontrées dans ce domaine technique.

Etant donné que la biellette ou analogue reliée au bras guide-ficelle est reliée par ailleurs à un maneton ou pivot excentré du plateau ou disque rotatif, et étant donné par ailleurs que celui-ci est entraîné en rotation sensiblement sur 360° quand l'origine de sa denture a été amenée en prise avec l'organe d'entraînement, il résulte de l'agencement prévu un déplacement en va-et-vient du bras guide-ficelle transversalement à la presse ce qui permet ainsi de réaliser le liage de la balle par la double course de ce bras.

La description qui va suivre, faite en regard des dessins annexés, donnés à titre non limitatif, permettra de mieux comprendre l'invention.

La Fig. 1 est une vue en perspective d'une presse à balles cylindriques du type auquel l'invention est appliquée.

La Fig. 2 est une représentation schématique d'un mode de réalisation possible du dispositif suivant l'invention.

La Fig. 3 en est une vue de détail.

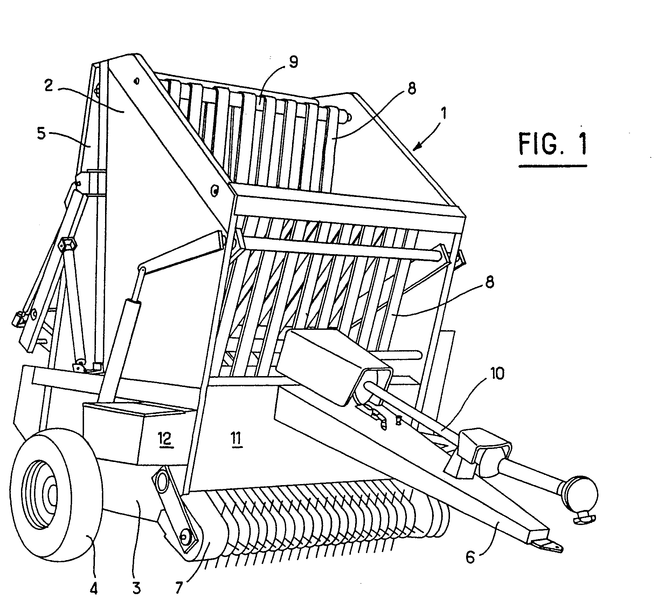

La presse représentée sur la Fig. 1 comprend de manière connue un corps 1 comportant une partie fixe 2 montée sur un châssis 3 supporté par des roues 4 et à l'extrémité supérieure de laquelle est articulée une porte arrière 5. L'ensemble est destiné à être attelé à un tracteur (non représenté) au moyen d'une flèche d'attelage 6. Lors du déplacement de la presse à travers le champ, les produits de récolte reposant sur le sol sont ramassés au moyen d'un ramasseur 7 et amenés à une chambre de formation d'une balle, qui est ménagée dans le corps 1 de la presse entre des jeux de courroies ou bandes 8 passant sur des rouleaux de guidage et de tension 9. L'entraînement des organes mobiles de la presse est assuré au moyen d'un arbre 10 qui est destiné à être relié à l'arbre de prise de force du tracteur.

Quand la balle a atteint le diamètre requis, elle est soumise dans la chambre de la presse à une opération de liage, d'une manière en soi connue, à l'aide d'un dispositif (non visible sur la Fig. 1) logé dans la partie avant 11 du corps de la presse, au moyen d'une ficelle prélevée à une boîte à ficelle 12 et amenée à un bras guide-ficelle monté de façon pivotante, dont une extrémité subit, pour le liage, un mouvement de balayage transversalement à la presse, devant l'orifice d'entrée des produits de récolte dans celle-ci. La balle liée est ensuite déchargée par ouverture de la porte arrière 5 de la presse.

Tous ces éléments sont bien connus et il ne semble pas nécessaire de les décrire en détail.

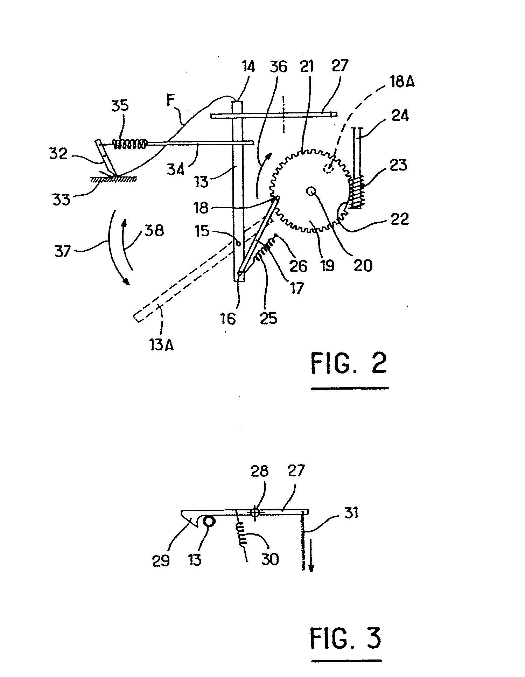

On a représenté de façon schématique sur la Fig. 2 un mode de réalisation du dispositif qui fait l'objet de l'invention pour la commande du déplacement du bras guide-ficelle devant l'orifice d'entrée des produits de récolte dans la presse.

Sur cette Fig. 2, on a indiqué schématiquement en 13 le bras guide-ficelle. Ce bras est de façon classique constitué au moins en partie par un tube (comme visible sur la Fig. 3) dans lequel passe la ficelle F destinée au liage de la balle. Cette ficelle quitte la partie tubulaire du bras guide-ficelle à l'extrémité 14 de celui-ci.

Les bras guide-ficelle 13 est monté à pivotement sur le corps ou châssis de la presse en 15, en un point situé sur sa longueur. Suivant l'invention, l'extrémité 16 du bras guide-ficelle opposée à son extrémité 14 de sortie de la ficelle est reliée par une biellette 17 à un maneton ou pivot excentré 18 d'un plateau ou disque 19 monté à rotation autour de son axe 20 de toute manière appropriée. Comme indiqué, ce plateau ou disque 19 est muni sur la majeure partie de sa périphérie d'une denture 21, mais il présente un secteur 22 dépourvu de denture s'étendant sur une longueur d'arc de faible valeur. On a montré en 23 une vis sans fin portée par un arbre 24 qui est entraîné de façon continue en rotation pendant le travail de la presse, à partir de l'arbre 10 de celle-ci.

Le bras guide-ficelle 13 est soumis à la sollicitation d'un ressort de traction 25, qui est relié par une extrémité à l'extrémité 16 du bras guide-ficelle et par son autre extrémité à un point fixe de la presse en 26. Le rôle de ce ressort sera indiqué plus loin.

On a représenté en traits pleins sur la Fig. 2 la position de repos du bras guide-ficelle 13. On voit que ce bras est maintenu dans cette position de repos d'une manière en soi usuelle au moyen d'un organe de verrouillage constitué par un levier 27 monté à pivotement en 28 (Fig. 3) et muni à une extrémité d'un bec 29 qui retient par verrouillage le bras guide-ficelle 13 dans sa position de repos ou d'arrêt, le levier 27 étant lui-même rappelé et maintenu dans cette position au moyen d'un ressort 30. On a indiqué schématiquement en 31 (Fig. 3) un cordon qui peut être actionné manuellement par le conducteur de la presse à la fin de l'opération de liage, ou bien qui peut être déplacé de façon automatique, d'une manière en soi connue dans cette technique, afin de libérer le bras guide-ficelle pour effectuer le liage.

On a indiqué également en 32 un couteau associé à une enclume 33, qui dans la position de repos du bras guide-ficelle, retient l'extrémité de la ficelle F. et qui peut être actionné pour couper la ficelle de liage à la fin de l'opération de liage, au moyen d'un levier 34 relié à ce couteau 32 avec interposition d'un ressort 35 et actionné par le bras guide-ficelle 13 lors de son retour à la position de repos, d'une manière en soi connue dans cette technique.

Comme indiqué précédemment, l'invention concerne plus spécialement le mode de commande du bras guide-ficelle 13 pour effectuer le liage, et on décrira maintenant le fonctionnement du dispositif objet de l'invention.

On supposera que la balle formé à l'intérieur de la presse a atteint le diamètre requis et que l'opération, est celle représentée sur la Fig. 2, c'est-à-dire que le secteur non denté 22 du plateau ou disque rotatif 19 se trouve en regard de la vis sans fin 23, de sorte que ce plateau ou disque n'est pas entraîné malgré la rotation continue de cette vis sans fin 23.

Dès que le cordon 31 est actionné, que ce soit à la main ou de façon automatique, pour déplacer le levier 27 et libérer ainsi le bras guide-ficelle 13, le ressort 25 agit sur l'extrémité 16 de ce bras guide-ficelle pour tendre à le déplacer dans le sens anti-horaire autour de son axe de pivotement 15. Sous l'effet de ce déplacement, la biellette 17, travaillant en compression, transmet une force au pivot excentré 18 du plateau ou disque 19, en tendant ainsi à déplacer ce plateau sur un angle de faible valeur dans la direction indiquée par la flèche 36. Ceci amène l'origine de la denture 21 du plateau ou disque 19 en prise avec la vis sans fin 23, et le plateau ou disque 19 est ainsi entraîné en rotation autour de son axe 20.

Du fait de la liaison établie au moyen de la biellette 26 entre le pivot excentré 18 du plateau ou disque 19 et l'extrémité 16 du bras guide-ficelle 13 monté à pivotement en 15, il va produire sous l'effet de la rotation du plateau ou disque 19, travaillant en excentrique, un déplacement angulaire de ce bras guide-ficelle 13, d'abord dans le sens indiqué par la flèche 37 jusqu'à une position qui correspond sensiblement au moment où le pivot 18 atteint la position 18A et qui est indiquée en pointillé en 13A, puis dans l'autre sens quand ce pivot excentré 18 couvre la seconde partie d'une révolution. Le bras guide-ficelle 13 revient alors en arrière comme indiqué par la flèche 38.

Il se produit ainsi un balayage en va-et-vient de l'extrémité 14 du bras guide-ficelle 13 correspondant à la sortie de la ficelle F devant l'orifice d'entrée des produits de récolte dans la presse, pour assurer le liage de la balle.

Quand le bras guide-ficelle 13 se rapproche de sa position de fin de course, qui est la position représenté en traits pleins sur la Fig. 2, il agit d'abord sur le levier 34, pour sectionner la ficelle F au moyen du couteau 32, qui va retenir l'extrémité de la ficelle de la manière usuelle. Il s'engage ensuite derrière le bec 29 du levier de verrouillage 27, par lequel il sera alors retenu en position de repos ou d'arrêt. Dans cette position, le secteur non denté 22 du plateau ou disque 19 est revenu se placer en face de la vis sans fin 23, de sorte que l'entraînement de ce plateau ou disque est interrompu.

On voit que le dispositif faisant l'objet de l'invention permet ainsi d'obtenir d'une manière simple une commande de balayage en va-et-vient pour le bras guide-ficelle 13 en vue de l'opération de liage.

**Revendications**

1. Dispositif de liage pour presse à balles cylindriques du type comprenant un bras guide-ficelle (13) monté de façon pivotante (en 15) sur la presse de façon à pouvoir effectuer un mouvement de balayage devant l'orifice d'entrée des produits de récolte dans cette presse, ce bras (13) étant alimenté en ficelle à partir d'une réserve de ficelle (12) et guidant celle-ci jusque devant cet orifice d'entrée, ledit bras étant retenu en position de repos d'un côté de la presse, pendant la formation de la balle dans la chambre de cette presse, au moyen d'un organe de verrouillage (27, 29), un organe élastique (25) monté entre un point fixe (26) de la presse et le bras guide-ficelle (13) déplaçant ce bras lors de son déverrouillage au début de l'opération de liage pour que la commande de pivotement dudit bras soit ensuite assurée à partir d'un excentrique (19), caractérisé en ce qu'un point (16) de ce bras guide-ficelle (13) ou d'un élément relié rigidement à lui, écarté du point de montage à pivotement (15) du bras, est relié directement par une biellette (17) ou analogue à un maneton ou pivot excentré (18) de cet excentrique (19), en ce que ledit excentrique (19) est muni d'une denture périphérique (21) présentant une discontinuité (22) formant un secteur périphérique non denté, en ce que cette denture (21) de l'excentrique (19) engrène pendant le liage avec un organe denté (23) entraîné en rotation de façon continue à partir de la presse, en ce que la position de ce secteur périphérique non denté (22) est telle qu'il se trouve en regard de l'organe denté pendant la formation de la balle, de sorte que l'excentrique (19) demeure alors immobile, et en ce que la biellette (17) est monté de façon à amener la denture (21) de l'excentrique (19) en prise avec l'organe denté associé (23) lors du déverrouillage en provoquant par suite la rotation de cet excentrique et le déplacement du bras guide-ficelle (13).

2. Dispositif suivant la revendication 1, caractérisé en ce que l'organe denté (23) est constitué par un pignon, une vis sans fin ou un organe analogue calé sur un arbre (24) entraîné en rotation de façon continue à partir de la presse.

3. Dispositif suivant la revendication 1, caractérisé en ce que le bras guide-ficelle (13) est monté à pivotement en un point (15) de sa longueur écarté de ses extrémités, en formant un levier à deux bras dont l'un (14) est attaqué par l'organe de verrouillage (27, 29) du bras guide-ficelle (13) dans la position de repos ou d'arrêt, la biellette (17) ou analogue étant reliée au côté opposé (16) de ce levier formé par le bras guide-ficelle.

4. Dispositif suivant la revendication 1, caractérisé en ce que le bras guide-ficelle (13) est monté à pivotement vers une extrémité, la biellette (17) ou analogue attaquant ce bras guide-ficelle entre cette extrémité de montage à pivotement et l'extrémité retenue par l'organe de verrouillage (27, 29).

**Patentansprüche**

1. Vorrichtung zum Binden für Pressen von zylindrischen Ballen des Typs, der einen Garnführungsarm (13) aufweist, welcher schwenkbar (bei 15) auf der Presse derart montiert ist, dass er vor der Eintrittsöffnung für die Ernteprodukte in die Presse eine Streichbewegung ausüben kann, welcher Arm (13) mit Garn von einem Garnvorrat (12) gespeist wird und dieses bis gerade vor die Eintrittsöffnung gleitet und welcher Arm während der Bildung des Ballens in der Kammer der Presse mit Hilfe eines Verriegelungsorganes (27, 29) in einer Ruhestellung an einer Seite der Presse gehalten wird, wobei ein elastisches Organ (25) zwischen einem Festpunkt (26) der Presse und dem Garnführungsarm (13) montiert ist, welches den Arm bei seiner Entriegelung am Beginn des Bindevorganges verstellt, um darauf die Steuerung der Schwenkbewegung des Armes durch einen Exzenter (19) sicherzustellen, dadurch gekennzeichnet, dass ein Punkt (16) des Garnführungsarmes (13) oder eines damit starr verbundenen Elementes, der im Abstand des Schwenkmontagepunktes (15) des Armes liegt, durch ein Gestängeglied (17) oder ein analoges Teil direkt mit einem Kurbelzapfen oder einem exzentrischen Anlenkpunkt (18) des Exzenters (19) verbunden ist, dass der Exzenter (19) mit einer umfänglichen Zahnung (21) versehen ist, die eine Unterbrechungsstelle (22) darbietet, welche einen nicht verzahnten Umfangssektor bildet; dass diese Zahnung (21) des Exzenters (19) während der Bindung mit einem gezahnten Organ (23) kämmt, welches von der Presse kontinuierlich drehend angetrieben wird; dass die Lage des nicht verzahnten Umfangssektors (22) derart gewählt ist, dass dieser sich während der Bindung des Ballens dem gezahnten Organ gegenüber befindet, derart, dass der Exzenter (19) unbeweglich bleibt, und dass das Gestängeglied (17) in der Weise montiert ist, dass es die Zahnung (21) des Exzenters mit dem zugeordneten gezahnten Organ (23) bei der Entriegelung in Eingriff bringt, um als Folge die Drehung des Exzenters und die Verstellung des Garnführungsarmes (13) hervorzurufen.

2. Vorrichtung nach Anspruch 1, dadurch gekennzeichnet, dass das gezahnte Organ (23) durch ein Zahnrad, eine Schraube ohne Ende oder ein analoges Organ gebildet ist, das auf einer Welle (24) aufgekeilt ist, die kontinuierlich von der Presse aus drehend angetrieben wird.

3. Vorrichtung nach Anspruch 1, dadurch gekennzeichnet, dass der Garnführungsarm (13) an einem Punkt (15) seiner Länge schwenkbar montiert ist, der im Abstand von seinen Enden liegt, um einen zweiarmigen Hebel zu bilden, dessen einer Arm (14) von dem Verriegelungsorgan (27, 29) des Garnführungsarmes (13) in der Ruhestellung oder Haltestellung beaufschlagt wird, während das Gestängeglied (17) oder ein analoges Teil mit der entgegengesetzten Seite (16) des durch den Garnführungsarm gebildeten Hebels verbunden ist.

4. Vorrichtung nach Anspruch 1, dadurch gekennzeichnet, dass der Garnführungsarm (13) im Bereich eines Endes schwenkbar montiert ist, während das Gestängeglied (17) oder ein analoges Teil den Garnführungsarm zwischen dessen schwenkbar montiertem Ende und dem Ende beaufschlagt wird, das durch das Verriegelungsorgan (27, 29) gehalten wird.

**Claims**

1. Wrapping mechanism for a roto baler of the type comprising a twine guide arm (13) pivotally mounted (at 15) on the baler so as to be able to effect a sweeping movement in front of the inlet opening to the baler for the harvested products, this arm (13) being supplied with twine from a supply (12) of twine and guiding it up to the front of this inlet opening, the said arm being kept in a position of rest at one side of the baler, during the formation of the bale in the baler, by means of a latch member (27, 29), a resilient member (25) fitted between a fixed point (26) of the baler and the twine guide arm (13) displacing this arm at the time of its un-latching at the start of the wrapping operation when the command for pivoting the said arm is then ensured by means of an eccentric (19), characterised in that a point (16) of the twine guide arm (13) or of a member rigidly fixed thereto, spaced from the pivotal mounting point (15) of the arm, is directly connected by a link (17) or the like to a crank pin or eccentric pivot (18) of this eccentric (19), in that the said eccentric is provided with peripheral teeth (21) with a discontinuity (22) forming a non-toothed peripheral sector, in that these teeth (21) of the eccentric (19) engage during the wrapping with a toothed member (23) rotated continuously by the baler, in that the position of the non-toothed peripheral sector (22) is such that it corresponds with the toothed member during the formation of the bale, so that the eccentric then remains stationary, and in that the link (17) is so mounted as to bring the teeth of the eccentric (19) into engagement with the associated toothed member (23) at the time of the un-latching, initiating in consequence the rotation of this eccentric and the displacement of the twine guide arm (13).

2. Mechanism according to claim 1, characterised in that the toothed member (23) is constituted by a pinion, an endless screw or a similar member keyed on a shaft (24) continuously rotated by the baler.

3. Mechanism according to claim 1, characterised in that the twine guide arm (13) is pivotally mounted at a point (15) along its length spaced from its ends, forming a lever with two arms, of which the one (14) is engaged by the latch member (27, 29) of the twine guide arm (13) in the position of rest or arrest, the link (17) or the like being connected to the opposite side (16) of this lever formed by the twine guide arm.

4. Mechanism according to claim 1, characterised in that the twine guide arm is pivotally mounted towards one end, the link (17) or the like engaging this twine guide arm between this end of pivotal mounting and the end retained by the latching member (27, 29).

FIG. 1

0 137 882

FIG. 2

FIG. 3

9